Europäisches Patentamt

European Patent Office

Office européen des brevets

(19)

(11) Veröffentlichungsnummer: **0 035 722**

**A1**

(12) **EUROPÄISCHE PATENTANMELDUNG**

(21) Anmeldenummer: **81101459.6**

(22) Anmeldetag: **28.02.81**

(51) Int. Cl.³: **F 24 D 3/00**
**F 16 L 3/24, E 04 B 5/48**

(30) Priorität: **12.03.80 DE 3009419**

(43) Veröffentlichungstag der Anmeldung:
**16.09.81 Patentblatt 81/37**

(84) Benannte Vertragsstaaten:
**AT BE FR NL SE**

(71) Anmelder: **TA ROKAL GmbH**
**Neckarstrasse 37**
**D-4330 Mühlheim/Ruhr(DE)**

(72) Erfinder: **Heger, Wolfram Hubertus**
**Ostenallee 82**
**D-4700 Hamm/Westfalen(DE)**

(74) Vertreter: **Bergen, Klaus, Dipl.-Ing. et al,**
**Patentanwälte Dr.-Ing. Reimar König Dipl.-Ing. Klaus**
**Bergen Cecilienallee 76**
**D-4000 Düsseldorf 30(DE)**

(54) Rohrhalter.

(57) Um Halter für Heizelemente einer Fußbodenheizung, die aus einem Fuß (3) und einer Festlegung (2) für die Heizelemente bestehen, zu schaffen, die auf einfache Weise fixiert werden können, wird vorgeschlagen, daß der Fuß (3) als Befestigung für den Halter ausgebildet ist, wobei es vorzuziehen ist, eine Bajonettfassung am hohlzylindrischen Fuß (3) anzuordnen.

Fig. 1

EP 0 035 722 A1

Croydon Printing Company Ltd.

TA ROKAL GmbH, Neckarstraße 37, 4330 Mühlheim/Ruhr

"Rohrhalter"

Die Erfindung betrifft Halter für Heizelemente einer Fußbodenheizung, bestehend aus einer Festlegung für die Heizelemente und einem Fuß.

Beim Verlegen von Fußbodenheizungen wird üblicherweise auf eine Rohdecke eine Isolierung zur Wärme- und Trittschalldämmung aufgelegt und werden sodann an einer auf der Isolierschicht ausgelegten Trägermatte die Heizelemente der Fußbodenheizung befestigt. Diese Trägermatte kann im Abstand zur Isolierschicht liegen und somit der Bewehrung des Estrichs dienen, in den die Fußbodenheizung eingegossen wird. Allerdings ist die Bewehrung nur bei verhältnismäßig großen oder für hohe Belastungen ausgelegten Bodenflächen erforderlich. Obwohl demnach der Estrich kleiner, nur geringen Belastungen ausgesetzter Bodenflächen nicht mit Trägermatten bewehrt sein muß, werden auch in diesem Fall Trägermatten verlegt, um die Heizelemente an dieser Matte befestigen zu können.

Bei in einem älteren Vorschlag der Anmelderin gemäß der DE-OS 28 24 936 beschriebenen Haltern für Heizelemente einer Fußbodenheizung werden die Heizelemente in sich mit Füßen oder einer Fußplatte auf der Isolierschicht abstützende Schellen eingelegt. Diese Halter sind mit Nuten versehen, in die die Stäbe der Trägermatte eingedrückt werden, so daß der Halter an der Matte befestigt ist. Zudem sollen die Halter die Trägermatte in einem bestimmten Abstand von der Isolierschicht halten; aus diesem Grunde sind die Nuten oberhalb der Füße oder Fußplatten angebracht. Da die Nuten in Stützrichtung offen sind, muß die Trägermatte angehoben werden, um die Mattenstäbe von oben in die Nut einlegen und somit den Halter an der Matte befestigen zu können.

Aus RAS (Rohr-Armatur-Sanitär-Heizung), Nov. 1977, S. 882, ist es bekannt, die Heizelemente in sich auf der Isolierschicht abstützende Schellen einzulegen und diese Halter dann gegen Verschieben beim Auftragen des Estrichs durch eine Drahtverbindung mit der Trägermatte zu sichern. Die Matte kann dabei entweder auf der Isolierschicht liegen, wenn sie nicht der Bewehrung des Estrichs dienen soll, oder sie wird auf besondere Abstandhalter gesetzt, so daß sie nach dem Auftragen des Estrichs in dessen Innerem verläuft. Diese Befestigung der Halter an der Trägermatte ist, insbesondere im letztgenannten Fall, daher sehr umständlich und zeitaufwendig.

Bei der Verlegung von Heizelementen ohne Trägermatten lassen sich die Halter für die Heizelemente jedoch nicht auf der Isolierschicht fixieren, da die Füße oder Fußplatten nicht als Befestigung für den Halter ausgebildet sind und somit nur eine stützende, nicht aber eine fixierende Funktion haben.

Der Erfindung liegt die Aufgabe zugrunde, einen Halter zu schaffen, der auf einfache Weise fixiert werden kann.

Diese Aufgabe wird bei einem Halter der eingangs genannten Art dadurch gelöst, daß der Fuß als Befestigung für den Halter ausgebildet ist.

Bei einer Ausführung ist der hohlzylindrische Fuß mit einer Bajonettfassung versehen, die von einer Unterkante des Fußes in Schraubenlinien mit gleichem Drehsinn zu der in axialer Verlängerung des Fußes liegenden Festlegung hin ansteigende Schlitze in der Fußwandung für einen Stab einer Trägermatte aufweisen kann. Während die Breite des Schlitzes vorzugsweise geringer ist als die Breite des einzulegenden Mattenstabes, können der Schlitzanfang und/oder das Schlitzende etwa der Breite des Mattenstabes entsprechen, so daß ein selbsttätiges Zurückrutschen eines durch den Schlitz bis zum Schlitzende eingeführten Mattenstabes in den Schlitz hinein nicht möglich ist.

Das Schlitzende kann gegenüber dem Schlitzanfang radial um etwa 90° verdreht sein; des weiteren liegen einerseits die Schlitzanfänge und andererseits die Schlitzenden sich in jeweils einer radialen Ebene des Fußes in der Fußwandung fluchtend gegenüber. Somit kann ein Mattenstab in beispielsweise zwei Schlitzen des Fußes geführt sein, so daß der Halter am Mattenstab zweifach festgelegt ist. Die Verbindung von Halter und Mattenstab entsteht durch axiales Zusammenstecken und anschließenden radiales Verdrehen des Halters. Durch den Schraubenlinienverlauf der Schlitze wird der Mattenstab beim Verdrehen des Halters bis in eine durch die Schlitzenden bestimmte Höhe oberhalb der Fußunterkante angehoben, so daß diese Bajonettfassung sowohl zur Befestigung des Halters als auch zur Fixierung der Trägermatte in einem bestimmten Abstand von der Isolierschicht dient.

Des weiteren sind die Schlitze nicht zur Stützseite der Trägermatte hin offen, sondern der Mattenstab wird durch die unterhalb der stützenden Schlitzenden liegenden

- 4 -

Schlitzanfänge eingelegt. Daher wird der Halter zum Befestigen nicht von unten an den Mattenstab herangeführt, sondern vielmehr von oben mit den Schlitzanfängen auf den Stab aufgesetzt und dann durch einfaches Verdrehen des Halters um etwa $90^{\circ}$ in Drehrichtung der Schlitze an dem Mattenstab befestigt.

Weiterhin kann der Fuß mit einem an der Unterkante abschließenden Boden versehen sein, der einen die Schlitzanfänge miteinander verbindenden Spalt aufweist. Durch diese Maßnahme erhält der Fuß eine verhältnismäßig große Fußplatte, die für die Auflage auf der verhältnismäßig nachgiebigen Isolierschicht von Vorteil ist, da das Gewicht der Trägermatte und des in den Halter einzusetzenden Heizelements auf eine verhältnismäßig große Fläche der Isolierschicht abgeleitet wird.

Durch die zweifache Fixierung des Halters an einem Mattenstab kann der Fuß am Mattenstab verkanten, wenn Heizelemente in dem Halter eingelegt sind, so daß selbst dann, wenn der Mattenstab und das Heizelement parallel geführt sind, ein Verschieben des Halters entlang am Heizelement in Längsrichtung des Mattenstabes weitgehend vermieden wird.

Bei einer alternativen Ausführung kann der Halter einen Fuß besitzen, der an seiner Außenwand mit radialen Vorsprüngen versehen ist. Vorzugsweise sind mehrere Vorsprünge auf dem Umfang des Fußes verteilt angeordnet die auch in mehreren radialen Ebenen des Fußes liegen können. Darüber hinaus können die Vorsprünge zu der in axialer Verlängerung des Fußes liegenden Festlegung hin geneigt sein, so daß der Fuß demnach mit Widerhaken besetzt ist.

Der mit diesem Fuß ausgestattete Halter kann dann direkt in der Isolierschicht befestigt werden. Zu diesem Zweck ist die Isolierung mit Sacklöchern für den Fuß des Halters zu versehen, die in gewünschten Abständen oder einem bestimmten Raster in die Isolierung eingebracht sind. Der Halter kann dann mit seinem Fuß einfach vertikal in das Sackloch hineingedrückt werden. Bei axialer Zugbeanspruchung des Halters verhindern die Widerhaken aufgrund ihrer entgegen der axialen Einsatzrichtung geneigten Lage zumindest das unbeabsichtigte Herausziehen des Halters aus dem Sackloch. Die radiale Erstreckung der Widerhaken ermöglicht auch nach dem Einsetzen in das Sackloch ein radiales Verdrehen des Halters in eine gewünschte Lage. Da sich bei dem Sackloch auch unterhalb des Fußes noch Isoliermaterial befindet, kommt der Fuß nicht mit der unter der Isolierschicht liegenden Rohdecke in Berührung, so daß keine Wärme- oder Schallbrücke entsteht.

Weiterhin erspart diese Befestigung des Halters direkt in der Isolierschicht die Verlegung und gegebenenfalls das Zurechtschneiden der Trägermatte, wenn eine Bewehrung des Estrichs mit der Trägermatte nicht erforderlich ist. Die Verlegung der Heizelemente mit Haltern der hier beschriebenen Ausführung ohne Verwendung von Trägermatten bringt deshalb eine erhebliche Materialeinsparung mit sich. Darüberhinaus kann auch der Zeitaufwand für die Befestigung der Halter verringert werden, w.nn erst einmal die Isolierung mit Sacklöchern für die Füße der Halter versehen ist.

Bei einem mit dem erfindungsgemäßen Fuß ausgestatteten Halter kann die Festlegung für das Heizelement aus einer Tellerplatte mit mindestens einem senkrecht zur Achse des Fußes verlaufenden Führungskanal für die Heizelemente bestehen. Der Führungskanal kann dabei einen U-förmigen Querschnitt mit dem Außendurchmesser der einzulegenden Heizelemente etwa entsprechender Höhe und Breite aufweisen und ist vorzugsweise durch an den oberen Randbereichen seiner Seitenwände angeformte Auskragungen als Clip ausgebildet. Diese Auskragungen können einander gegenüberliegen und als sich in Längsrichtung des Führungskanals erstreckende Leisten ausgebildet sein, die vorzugsweise von der jeweiligen Seitenwand zur Kanalmitte hin abgeschrägt sind. Somit können die Heizelemente von oben her in den Führungskanal hineingedrückt werden, in dem sie dann durch die die Kanalbreite verringernden Auskragungen sicher gehalten werden. Zudem weist der Führungskanal eine Länge auf, die dem Vielfachen der Breite bekannter Schellen zur Festlegung der Heizelemente entspricht. Da die Heizelemente demnach auf einer bestimmten Länge im Führungskanal liegen, werden sie in diesem Kanal nicht nur gehalten, sondern zugleich geführt, so daß ein exaktes Verlegen der Heizelemente, beispielsweise in parallel liegenden Schleifen, auch dann noch erfolgen kann, wenn die Heizelemente tragenden Halter in verhältnismäßig großen Abständen angeordnet sind.

Des weiteren können die Seitenwände des Führungskanals über eine Rundung mit Außenwänden der Tellerplatte verbunden sein. Die Festlegung stellt somit ein im wesentlichen hohlzylindrisches Teil dar, das an der mit der Einlegeseite des Führungskanals in einer Ebene liegenden Oberseite nicht abgedeckt ist und somit beim Auftragen des Estrichs von diesem im wesentlichen ausgefüllt wird, so daß keine größeren, die Tragfähigkeit des Estrichs beeinträchtigenden Hohlräume nach dem Eingießen der Fußbodenheizung im Estrich verbleiben. Die Rundung der Wandverbindung ist von Vorteil, wenn die Heizelemente zwischen zwei Haltern in einem Bogen verlegt sind und dabei durch die gerundeten Seitenwände eine Beschädigung der Heizelemente, beispielsweise durch Knicken, vermieden werden kann.

Vorzugsweise ist die Festlegung mit zwei sich rechtwinklig kreuzenden Führungskanälen versehen, so daß der Halter an einer Trägermatte befestigt bzw. in ein Sackloch eingesetzt werden kann, ohne daß auf den späteren Verlauf der Heizelemente in dem Führungskanal Rücksicht genommen werden muß. Bei der Verlegung der Heizelemente kann dann jeweils der am günstigsten gelegene der beiden Führungskanäle benutzt werden.

In einer bevorzugten Ausführung ist der Fuß zentrisch an einer Unterseite der Tellerplatte angeordnet; außerdem kann sowohl der Fuß als auch die Tellerplatte zylindrisch ausgebildet sein.

Der Halter kann schließlich als einstückiges Formteil ausgebildet sein und aus Kunststoff bestehen.

Die Erfindung wird nachfolgend anhand der in den Zeichnungen dargestellten Ausführungsbeispiele des näheren erläutert. Es zeigen:

Fig. 1   einen Halter mit einem als Bajonettfassung ausgebildeten Fuß in Vorderansicht;

0035722

- 8 -

Fig. 2    den Halter nach Fig. 1 in Seitenansicht;

Fig. 3    den Halter nach Fig. 1 in Draufsicht;

Fig. 4    einen Vertikalschnitt durch eine Decke mit ausgelegter Trägermatte und Haltern gemäß Fig. 1;

Fig. 5    eine Draufsicht auf die Decke nach Fig. 4;

Fig. 6    einen Halter mit einem mit Widerhaken versehenen Fuß in Vorderansicht;

Fig. 7    den Halter nach Fig. 6 in Seitenansicht;

Fig. 8    den Halter nach Fig. 6 in Draufsicht;

Fig. 9    einen Vertikalschnitt durch eine Decke mit Haltern gemäß Fig. 6; und

Fig.10    eine Draufsicht auf die in Fig. 9 dargestellte
          Decke.

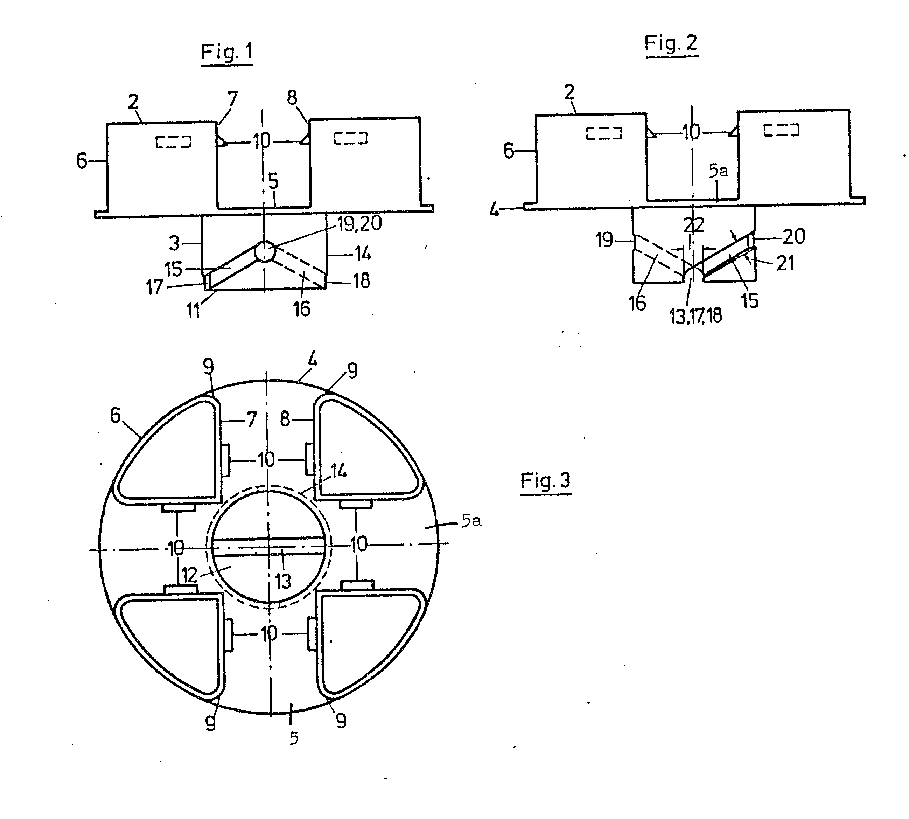

Ein in den Fig.1 bis 3 dargestellter Halter 1 besteht aus
einer Festlegung 2 für Heizelemente und einem Fuß 3, der
als Bajonettfassung ausgebildet ist.

Der hohlzylindrische Fuß 3 ist in axialer Verlängerung
zentrisch an die ebenfalls im wesentlichen hohlzylindrische Festlegung 2 angeformt. Die Festlegung 2 für die
Heizelemente besteht aus einer sich radial zur Achse des
Fußes 3 ausweitenden Tellerplatte 4, die mit zwei senkrecht und symmetrisch zur Achse des Fußes verlaufenden
und sich rechtwinklig kreuzenden Führungskanälen 5, 5a
für die Heizelemente versehen ist. Die senkrecht auf der Tellerplatte 4 stehende Außenwand 6 wird von den Kanälen 5, 5a an jeweils gegenüberliegenden Seiten durchbrochen und mit den Seitenwänden 7, 8 der Kanäle über Rundungen 9 verbunden.

Die Führungskanäle 5, 5a besitzen jeweils einen U-förmigen Querschnitt, dessen Höhe und Breite dem Außendurchmesser der einzulegenden Heizelemente entsprechen. An den oberen Randbereichen der Seitenwände 7, 8 sind einander gegenüberliegende, sich in Längsrichtung erstreckende und von der Seitenwand 7 bzw. 8 zur Kanalmitte hin abgeschrägte Leisten 10 so angeformt, daß jeder Führungskanal 5, 5a als Clip ausgebildet ist, in den die Heizelemente eingedrückt werden können.

Der Fuß 3 des Halters 1 ist an seiner der Festlegung 2 gegenüberliegenden Unterkante 11 mit einem Boden 12 versehen, der einen rechtwinklig zu einem der Kanäle 5, 5a liegenden Spalt 13 aufweist. Von der Unterkante 11 des Fußes 3 sind in die Fußwandung 14 Schlitze 15, 16 eingebracht, die jeweils von dem Spalt 13 ausgehend in Schraubenlinien mit gleichem Drehsinn von Schlitzanfängen 17, 18 bis zu Schlitzenden 19, 20 zur Tellerplatte 4 hin ansteigen. Die Schlitzenden 19, 20 sind dabei gegenüber den Schlitzanfängen 17, 18 radial um etwa 90° verdreht. Da die Schlitze 15, 16 den gleichen Steigungswinkel aufweisen, liegen sich zum einen die Schlitzanfänge 17, 18 und zum anderen die Schlitzenden 19, 20 in jeweils gleichen radialen Ebenen in der Fußwandung 14 fluchtend einander gegenüber. Während die Breite 21 der Schlitze 15, 16 geringer ist als die Breite eines in die Schlitze einzulegenden Mattenstabes, entspricht die Breite 22 am Schlitzanfang und am Schlitz-

- 10 -

ende der Breite des Mattenstabes.

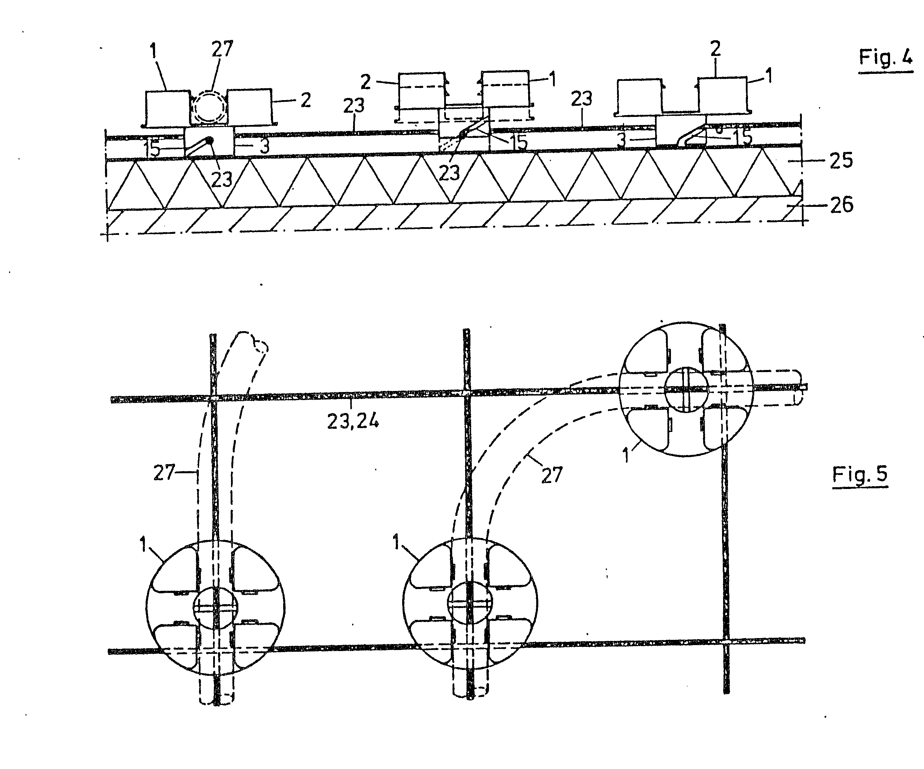

Zum Befestigen an einem Stab einer Trägermatte wird der Halter 1 gemäß Fig. 4 mit dem Spalt 13 des Fußes 3 auf einen Stab 23 einer Trägermatte 24 aufgesetzt und anschließend radial verdreht, so daß der Stab 23 von den Schlitzanfängen 17, 18 zu den Schlitzenden 19, 20 in den Schlitzen 15, 16 geführt wird und dort gegen ein Zurückdrehen gesichert festliegt. Durch die Schraubenlinienform der Schlitze 15, 16 werden der Stab 23 und der Halter 1 zugleich relativ aufeinander zu bewegt, so daß sich der Halter 1 mit dem Fuß 3 auf einer Isolierschicht 25 abstützen kann, die auf einer Rohdecke 26 aufgelegt ist. Aufgrund der Bajonettfassung des Fußes 3 liegt der Stab 23 und damit auch die Trägermatte 24 im Abstand oberhalb der Isolierschicht 25 und damit kann nach dem Einlegen von Heizelementen 27 in die Halter 1 die Fußbodenheizung in eine Estrichschicht eingegossen werden. Die Trägermatte 24 dient dann in dem auf Zug beanspruchten unteren Teil der Estrichschicht als Bewehrung.

Die Halter 1 können gemäß Fig. 5 auf der Trägermatte 24 im Raster so angeordnet werden, daß die Heizelemente 27 parallel und im Bogen zwischen den Haltern 1 verlaufen.

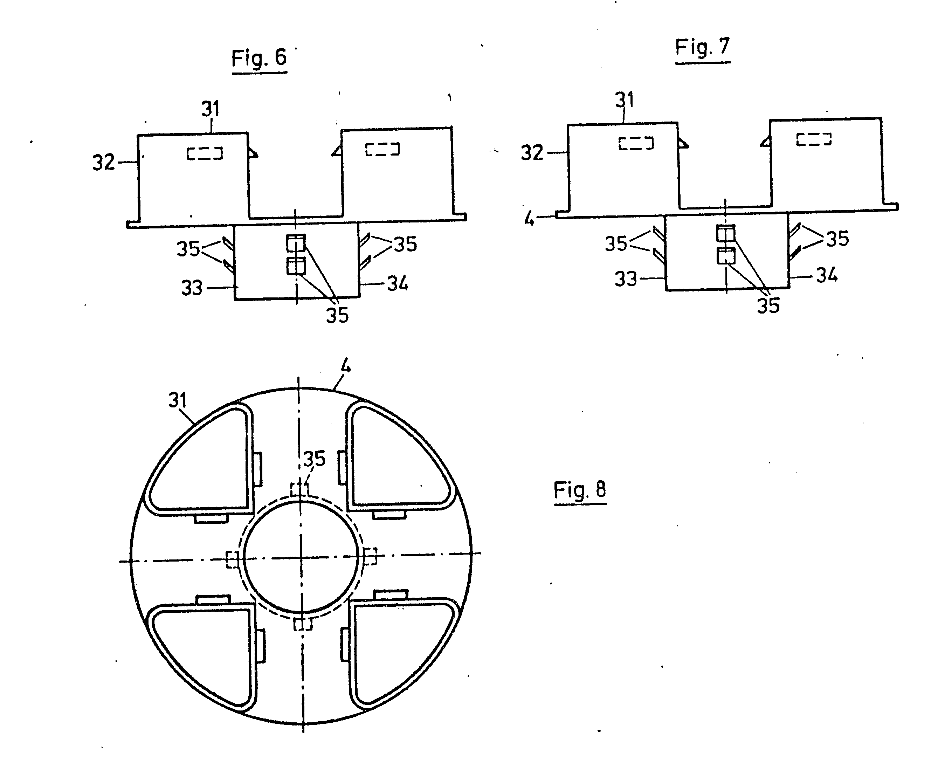

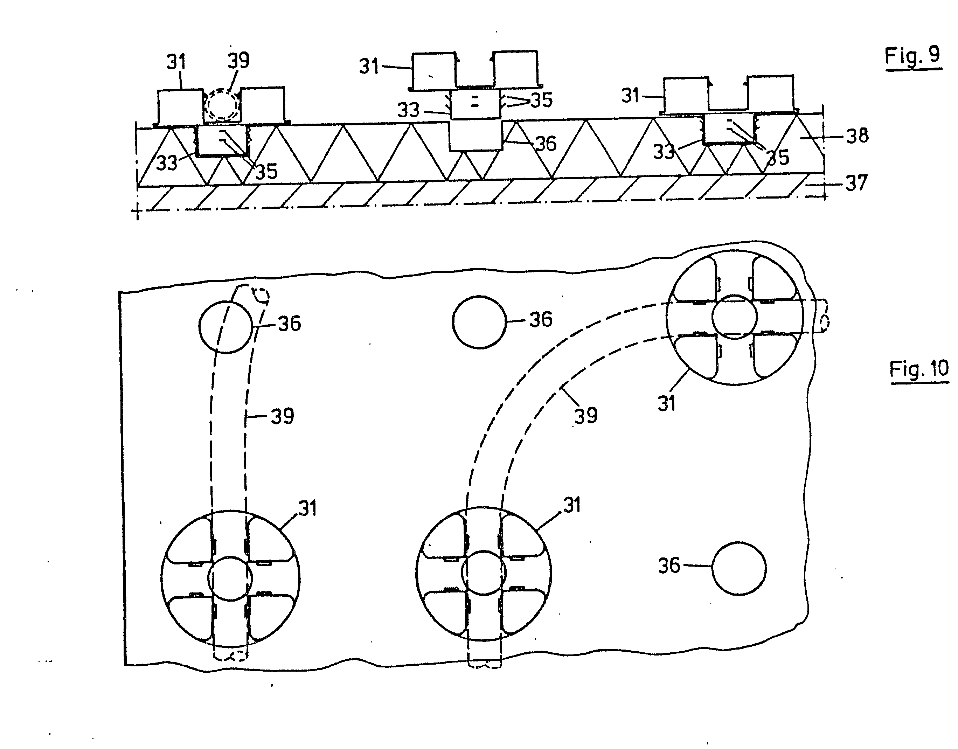

In den Fig. 6 bis 8 ist eine Alternativausführung eines Halters 31 dargestellt, der aus einer Festlegung 32 und einem Fuß 33 besteht. Während die Festlegung 32 der Festlegung 2 des in den Fig. 1 bis 5 gezeigten Halters 1 entspricht und daher auch mit gleichen Bezugszeichen versehen ist, besitzt der zylindrische und zentrisch an der Tellerplatte 4 angebrachte Fuß 33 mehrere radiale, auf dem Umfang des Fußes verteilt und an der Fußwandung 34 in zwei radialen Ebenen angeordnete Vorsprünge 35.
Da diese Vorsprünge 35 zu der Festlegung 32 hin geneigt sind, wirken sie als Widerhaken, wenn der Halter
31 gemäß Fig. 9 durch axiales Eindrücken in ein Sackloch 36 eingesetzt wird, das in eine auf eine Rohdecke
37 aufgelegt Isolierschicht 38 eingebracht ist. Der
Durchmesser des Sacklochs 36 entspricht dabei dem des
Fußes 33, so daß die Vorsprünge 35 in das Isoliermaterial eingreifen und somit ein fester Sitz des mit
der Tellerplatte 4 auf der Isolierschicht 38 aufliegenden Halters 31 gewährleistet ist, Da zwischen der
Rohdecke 37 und dem unteren Ende des Sacklochs 36 noch
Isoliermaterial der Isolierschicht 38 liegt, kann
zwischen der Rohdecke 37 und dem mit Heizelementen 39
versehenen Halter 31 auch keine Wärme- oder Schallbrücke entstehen.

Gemäß Fig. 10 sind die mit Heizelementen 39 versehenen
Halter 31 in die rasterartig in die Isolierschicht 38
eingebrachten Sacklöcher 36 so eingesetzt, daß die
Heizelemente 39 zwischen den Haltern 31 parallel und
im Bogen geführt werden.

KS kf

TA ROKAL GmbH, Neckarstraße 37, 4330 Mühlheim/Ruhr

Patentansprüche:

1. Halter für Heizelemente einer Fußbodenheizung, bestehend aus einer Festlegung für die Heizelemente und einem Fuß, d a d u r c h  g e k e n n - z e i c h n e t , daß der Fuß (3, 33) als Befestigung für den Halter (1, 31) ausgebildet ist.

2. Halter nach Anspruch 1, g e k e n n z e i c h - n e t  d u r c h eine Bajonettfassung am hohlzylindrischen Fuß (3).

3. Halter nach Anspruch 2, g e k e n n z e i c h - n e t  d u r c h eine Bajonettfassung mit mehreren von einer Unterkante (11) des Fußes (3) in Schraubenlinien mit gleichem Drehsinn zur Festlegung (2) hin ansteigenden Schlitzen (15, 16) in der Fußwandung (14) für einen Stab (23) einer Trägermatte (24).

4. Halter nach Anspruch 2 oder 3, d a d u r c h g e k e n n z e i c h n e t , daß die Breite (21) des Schlitzes (15, 16) geringer ist als die Breite des einzulegenden Mattenstabes (23).

5. Halter nach einem oder mehreren der Ansprüche 2 bis 4, d a d u r c h  g e k e n n z e i c h n e t, daß die Breite (22) des Schlitzes am Schlitzanfang (17, 18) und/oder am Schlitzende (19, 20) etwa der Breite des Mattenstabes (23) entspricht.

0035722

6. Halter nach einem oder mehreren der Ansprüche 2 bis 5, g e k e n n z e i c h n e t   d u r c h eine um etwa 90° radial versetzte bzw. verdrehte Lage des Schlitzendes (19, 20) gegenüber dem Schlitzanfang (17, 18).

7. Halter nach einem oder mehreren der Ansprüche 2 bis 6, d a d u r c h   g e k e n n z e i c h n e t , daß einerseits die Schlitzanfänge (17, 18) und andererseits die Schlitzenden (19, 20) sich in jeweils einer radialen Ebene des Fußes (3) in der Fußwandung (14) fluchtend gegenüberliegen.

8. Halter nach einem oder mehreren der Ansprüche 1 bis 7, g e k e n n z e i c h n e t   d u r c h  einen den Fuß (3) an der Unterkante (11) abschließenden Boden (12) mit einem die Schlitzanfänge (17, 18) miteinander verbindenden Spalt (13).

9. Halter nach Anspruch 1, g e k e n n z e i c h n e t d u r c h   radiale Vorsprünge (35) an der Außenwand des Fußes (33).

10. Halter nach Anspruch 9, g e k e n n z e i c h n e t d u r c h   mehrere auf dem Umfang des Fußes (33) verteilt angeordnete Vorsprünge (35).

11. Halter nach Anspruch 9 oder 10, g e k e n n - z e i c h n e t   d u r c h Vorsprünge (35) in mehreren radialen Ebenen des Fußes (33).

12. Halter nach einem oder mehreren der Ansprüche 9 bis 11, d a d u r c h   g e k e n n z e i c h n e t ,

daß die Vorsprünge (35) zu der in axialer Verlängerung des Fußes (33) liegenden Festlegung (32) hin
geneigt sind.

13. Halter nach einem oder mehreren der Ansprüche 1 bis
8, bzw. der Ansprüche 1 und 9 bis 12, d a d u r c h
g e k e n n z e i c h n e t , daß die Festlegung aus
einer Tellerplatte (4) mit mindestens einem senkrecht
zur Achse des Fußes (3, 33) verlaufenden Führungskanal (5, 5a) für die Heizelemente (27, 39) besteht.

14. Halter nach Anspruch 13, g e k e n n z e i c h n e t
d u r c h einen U-förmigen Querschnitt mit dem Außendurchmesser der einzulegenden Heizelemente (27, 39)
etwa entsprechender Höhe und Breite des Führungskanals (5, 5a).

15. Halter nach Anspruch 13 oder 14, d a d u r c h
g e k e n n z e i c h n e t , daß der Führungskanal
(5, 5a) durch an den oberen Randbereichen seiner
Seitenwände (7, 8) angeformte Auskragungen (10) als
Clip ausgebildet ist.

16. Halter nach einem oder mehreren der Ansprüche 13 bis
15, g e k e n n z e i c h n e t d u r c h einander gegenüberliegende Auskragungen (10).

17. Halter nach einem oder mehreren der Ansprüche 13 bis
16, g e k e n n z e i c h n e t d u r c h sich
in Längsrichtung des Führungskanals (5, 5a) erstreckende Leisten (10) als Auskragungen.

18. Halter nach einem oder mehreren der Ansprüche 13 bis

17, g e k e n n z e i c h n e t   d u r c h  von der Seitenwand (7, 8) zur Kanalmitte hin abgeschrägte Leisten (10).

19. Halter nach einem oder mehreren der Ansprüche 13 bis 18, g e k e n n z e i c h n e t   d u r c h  mit den Seitenwänden (7, 8) des Führungskanals (5, 5a) über eine Rundung (9) verbundene Außenwände (6) der Tellerplatte (4).

20. Halter nach einem oder mehreren der Ansprüche 13 bis 19, g e k e n n z e i c h n e t   d u r c h  zwei sich rechtwinklig kreuzende Führungskanäle (5, 5a).

21. Halter nach einem oder mehreren der Ansprüche 13 bis 20, d a d u r c h   g e k e n n z e i c h n e t , daß der Fuß (3, 33) zentrisch an einer Unterseite der Tellerplatte (4) angeordnet ist.

22. Halter nach einem oder mehreren der Ansprüche 13 bis 21, g e k e n n z e i c h n e t   d u r c h  eine zylindrische Form des Fußes (3, 33) und/oder der Festlegung (2, 32).

23. Halter nach einem oder mehreren der Ansprüche 13 bis 22, d a d u r c h   g e k e n n z e i c h n e t , daß der Halter (1, 31) als einstückiges Formteil ausgebildet ist.

24. Halter nach einem oder mehreren der Ansprüche 13 bis 23, d a d u r c h   g e k e n n z e i c h n e t , daß der Halter (1, 31) aus Kunststoff besteht.

Fig. 1    Fig. 2

Fig. 1

Fig. 2

Fig. 3

Fig. 4

Fig. 5

Fig. 6

Fig. 7

Fig. 8

3/4

0035722

Fig. 9

Fig. 10

## EUROPÄISCHER RECHERCHENBERICHT

**Europäisches Patentamt**

Nummer der Anmeldung

EP 81 10 1459.6

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A1 - 2 807 446 (ITW-ATECO GMBH) <br> * ganzes Dokument * <br><br> -- | 1-7,13, <br> 21,23, <br> 24 |
| | DE - U1 - 7 913 311 (STRAMAX AG) <br> * Fig. 1 und 3, Positionen 5 und 13 * <br><br> -- | 9 |
| D,A | DE - A1 - 2 824 936 (TA TOUR & ANDERSSON GMBH) <br> * ganzes Dokumen * <br><br> ---- | 1 |

**KLASSIFIKATION DER ANMELDUNG (Int. Cl.³)**

F 24 D 3/00

F 16 L 3/24

E 04 B 5/48

**RECHERCHIERTE SACHGEBIETE (Int. Cl.³)**

F 16 B 2/00

F 16 B 7/00

F 16 L 3/00

F 24 D 3/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| Berlin | 11-06-1981 | PIEPER |

EPA form 1503.1 06.78